# EUROPÄISCHE PATENTSCHRIFT

(11) **EP 0 780 624 B1**
(45) Veröffentlichungstag und Bekanntmachung des Hinweises auf die Patenterteilung: **14.04.2004**
(21) Anmeldenummer: 96117570.0
(22) Anmeldetag: 02.11.1996
(51) Int. Cl.: F21V 14/08, B60Q 1/14

(54) **Abblendlicht-Scheinwerfer für Fahrzeuge**
Vehicle low-beam headlamp
Phase de croisement pour véhicule

(30) Priorität: 22.12.1995 DE 19548485
(43) Veröffentlichungstag der Anmeldung: 25.06.1997
(73) Patentinhaber: Bayerische Motoren Werke Aktiengesellschaft, 80788 München (DE)
(72) Erfinder: Huhn, Wolfgang, 85247 Schwabhausen (DE)

(56) Entgegenhaltungen:
- DE-A- 3 415 867
- DE-A- 3 743 137
- US-A- 5 247 440

## Beschreibung

Die Erfindung bezieht sich auf einen Abblendlicht-Scheinwerfer mit den Merkmalen des Oberbegriffs von Patentanspruch 1.

Ein derartiger Scheinwerfer ist aus der DE 43 07 109 A1 bekannt. Zum Ändern der Einstellung des Scheinwerfers ist dieser um seine Längsachse schwenkbar. Dadurch ändert sich die Hell-Dunkelgrenze auf beiden Seiten. Der zunächst geneigte Abschnitt geht in einen horizontalen Abschnitt über, während der zunächst horizontale Abschnitt dann geneigt ist. Der bekannte Scheinwerfer ist von der Einstellung für Rechtsverkehr in die Einstellung für Linksverkehr umrüstbar. Dies erfordert einen erheblichen Aufwand und bietet darüber hinaus nicht die erforderliche Sicherheit. Es besteht die Gefahr, am Rechtsverkehr mit einem Scheinwerfer für Linksverkehr teilzunehmen mit der Folge einer unerwünschten und unzulässigen Blendung des Gegenverkehrs. Entsprechendes gilt umgekehrt.

Aus der DE-A-34 15 867 ist es ferner bekannt, einen Abblend-Scheinwerfer wahlweise für Rechts- oder Linksverkehr einzustellen. Unter Einstellung ist dabei der asymmetrische Verlauf der Hell-Dunkelgrenze bzw. die asymmetrische Anhebung des ausgesandten Lichtbündels zu verstehen. Dies wird durch Verschwenken einer Blende innerhalb des Scheinwerfers erreicht.

Schließlich ergibt sich aus der US-A-5 247 440 ein Scheinwerfer, bei dem eine von den nationalen rechtlichen Gegebenheiten abhängige selbsttätige Ein- und Ausschaltung des Scheinwerfers vorgenommen wird. Insbesondere soll die Betriebsart des Scheinwerfers zwischen den insgesamt möglichen drei Betriebsarten Abblendlicht, Standlicht und Licht-Aus ausgewählt werden. Die einzustellende Betriebsart hängt von der nationalen Gesetzgebung und der aktuellen Uhrzeit ab.

Der Erfindung liegt die Aufgabe zugrunde, einen Scheinwerfer der eingangs genannten Art zu schaffen, bei dem die richtige und zulässige Einstellung des Scheinwerfers sichergestellt und überprüfbar ist.

Die Erfindung löst diese Aufgabe durch die kennzeichnenden Merkmale des Patentanspruchs 1.

Durch die selbsttätige Einstellung und Änderung der Einstellung dann, wenn dies erforderlich ist, ist der Fahrzeugbenutzer entlastet und kann sicher sein, den Scheinwerfer mit der jeweils richtigen Einstellung zu benutzen.

Es gibt verschiedene Möglichkeiten, die Einstellung des Scheinwerfers zu verändern. Eine Möglichkeit besteht darin, wie in der DE 43 07 109 A1 den Scheinwerfer um seine Längsachse zu schwenken oder wie bei der DE-A-34 15 867 innerhalb des Scheinwerfers eine Blende vorzusehen, die vorzugsweise motorisch schwenkbar ist. Das Scheinwerfergehäuse bleibt dabei in seiner Einbaulage. Diese Ausführung eignet sich bevorzugt bei Elipsoidscheinwerfem.

Weiter ist es möglich, im Bereich der Streuscheibe an geeigneter Stelle Material vorzusehen, das in seiner optischen Durchlässigkeit änderbar ist. Hierzu eignet sich beispielsweise LCD-Kristalle. Eine Möglichkeit, auf diese Weise die Lichtverteilung und hier insbesondere die Umstellung zwischen Links- auf Rechtsverkehr und umgekehrt vorzunehmen, ist in der DE 37 26 478 A1 beschrieben. Diese Ausführung eignet sich beispielsweise bei Scheinwerfern mit Freiformreflektoren.

Anstelle eines motorischen Antriebs kann die Lageänderung des beweglichen Teils auch durch eine Strebe aus Memorymetall vorgenommen werden, die bei Erwärmung ihre Gestalt ändert und das mit ihr verbundene Teil in seiner Lage verändert.

Die Änderung der Einstellung des Scheinwerfers erfolgt bei einem Grenzübertritt dann, wenn in dem neuen Land anstelle von Links- Rechtsverkehr herrscht bzw. umgekehrt. Erkennbar wird der Grenzübertritt für eine dem Scheinwerfer zugeordnete Steuereinheit mit Hilfe eines i.d.R. ohnehin vorhandenen Navigationssystem. Innerhalb des Navigationssystems sind Ländergrenze ohne weiteres markierbar und das Überfahren einer Ländergrenze ohne weiteres nachvollziehbar. Das Navigationssystem braucht dann lediglich noch die Information ausgeben, auf welcher Fahrbahnseite in dem jeweiligen Land gefahren wird.

Im Gegensatz zu einem einmalig beim Grenzübertritt ausgebbaren Befehl zur Änderung der Einstellung lässt sich mit Hilfe des Navigationssystems die gewählte Einstellung auch nach dem Grenzübertritt jederzeit überprüfen und ggf. korrigieren. Es ergeben sich beispielsweise dann Vorteile, wenn in kurzen Zeitabschnitten mehrmals ein Grenzübertritt zwischen zwei benachbarten Ländern erfolgt oder aber dann, wenn der Empfang und/oder die Umsetzung des Befehlssignals gestört ist.

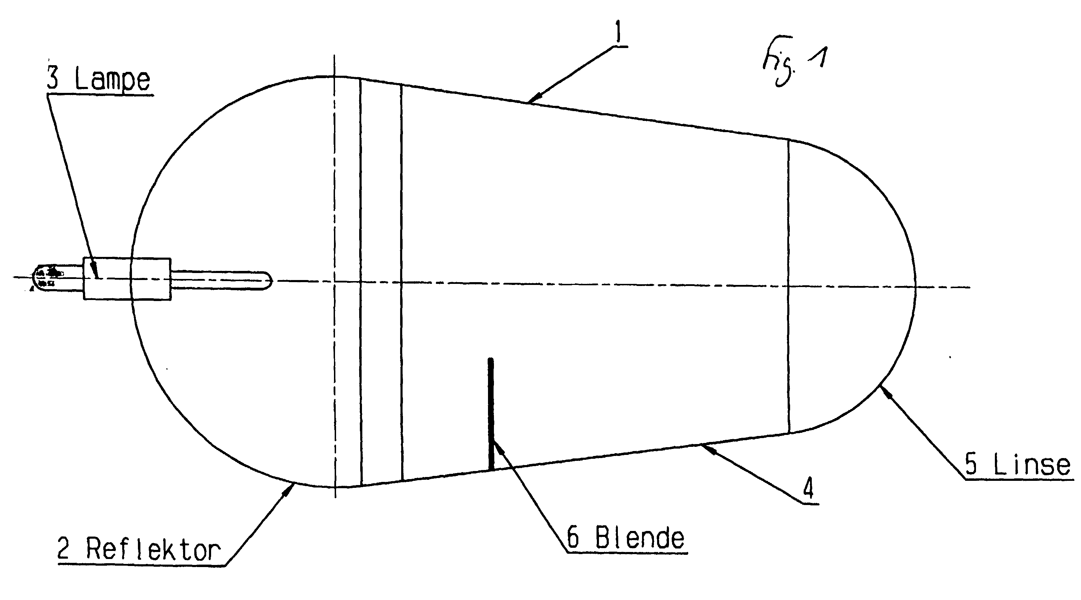

Anhand der Zeichnung ist die Erfindung weiter erläutert. Es zeigt
- Fig. 1: einen Scheinwerfer gemäß der Erfindung von der Seite und
- Fig. 2: den Scheinwerfer von Fig. 1 in der Frontansicht.

Bei dem in der Zeichnung dargestellten Scheinwerfer handelt es sich um einen Elipsoidscheinwerfer 1, der im wesentlichen einen Reflektor 2, eine Lampe 3, ein Gehäuse 4 sowie eine Linse 5 enthält. Innerhalb des Gehäuses ist eine Blende 6 verschwenkbar gelagert.

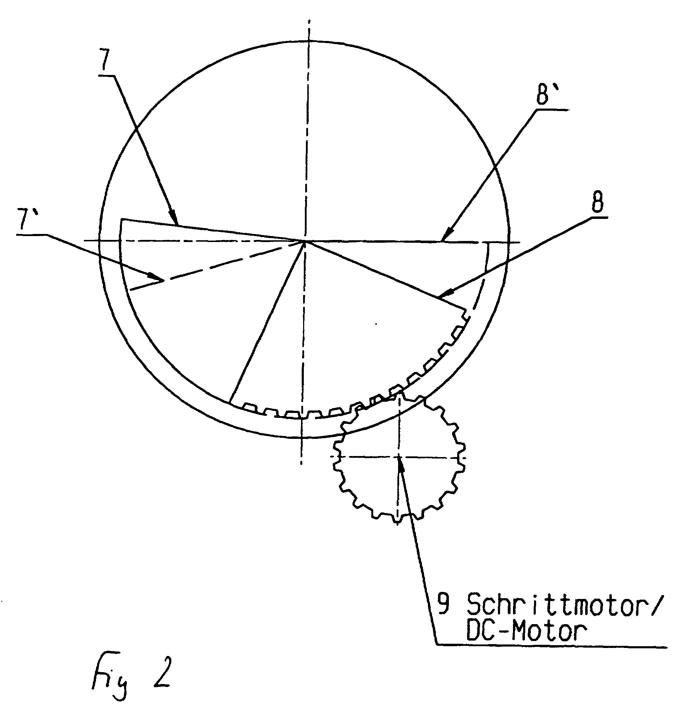

Die Blende 6 ist in ihrem Aufbau in Fig. 2 näher dargestellt. Sie besitzt eine etwa halbkreisförmige Gestalt mit einem horizontalen Abschnitt 7 sowie einem geneigten Abschnitt 8. Da sich der geneigte Abschnitt 8 in Strahlrichtung gesehen links befindet, ergibt sich auf der linken Fahrbahnseite eine Anhebung des Strahlenbündels. Es handelt sich um einen Scheinwerfer für Linksverkehr.

Wird das Fahrzeug in ein Land mit Rechtsverkehr gebracht, so kann aus einem nicht dargestellten Navigationssystem die Information gewonnen werden, wann das Fahrzeug die Ländergrenze überschreitet und welche Verkehrsrichtung in dem Land dann herrscht. Es sei hier ein Übertritt in ein Land mit Rechtsverkehr angenommen. Mit Hilfe eines motorischen Antriebs, beispielsweise einem Schrittmotor 9 wird die Blende 6 dann in eine Stellung verschwenkt, bei der der zunächst geneigte Abschnitt 8 in die waagrechte Lage 8' gebracht wird. Der leicht nach oben geneigte Abschnitt 7 wird dann zu einem nach unten geneigten Abschnitt 7'. Dieser Scheinwerfer ist dann für Rechtsverkehr geeignet. Das ausgesandte Lichtbündel besitzt eine Anhebung auf der rechten Seite.

Damit ist es ohne Zutun des Fahrzeugbenutzers möglich, die asymmetrische Einstellung des Abblendlicht-Scheinwerfers 1 für Rechts- und Linksverkehr in der jeweiligen richtigen Weise einzustellen.

## Patentansprüche

1. Abblendlicht-Scheinwerfer für Fahrzeuge mit einer Einstellung für Links- und einer Einstellung für Rechtsverkehr, **dadurch gekennzeichnet, dass** die eine Einstellung selbsttätig durch ein Navigationssystem gesteuert bei einem Grenzübertritt in ein anderes Land in die für dieses Land richtige Einstellung überführt wird und auch nach dem Grenzübertritt jederzeit überprüft wird, wobei die Einstellung des Scheinwerfers auf einem Display angezeigt ist.

2. Scheinwerfer nach Anspruch 1, **dadurch gekennzeichnet, daß** die Änderung der Einstellung durch Verdrehen einer Blende erfolgt.

3. Scheinwerfer nach Anspruch 2, **dadurch gekennzeichnet, daß** das Verdrehen der Blende motorisch erfolgt.

## Claims

1. A dipped beam headlamp for vehicles with an adjustment for driving on the left and an adjustment for driving on the right, **characterised in that** the one adjustment is transferred automatically, controlled by a navigation system, when crossing a border into another country, into the correct adjustment for this country and also after crossing the border is checked at any time, in which the adjustment of the headlamp is shown on a display.

2. A headlamp according to claim 1, **characterised in that** the adjustment is changed by turning a screen.

3. A headlamp according to claim 2, **characterised in that** the screen is turned by a motor.

## Revendications

1. Phare de croisement pour des véhicules automobiles, avec un réglage pour la circulation à gauche et pour la circulation à droite,
**caractérisé en ce que**
le réglage commandé par un système de navigation quand le véhicule traverse une frontière pour entrer dans un autre pays, est automatiquement effectué et amené au réglage exact pour ce pays, et après ce passage, il peut être contrôlé à tout moment en étant indiqué sur un écran.

2. Phare selon la revendication 1,
**caractérisé en ce que**
la modification du réglage a lieu en faisant tourner un écran.

3. Phare selon la revendication 2,
**caractérisé en ce que**
la rotation de l'écran est motorisée.
